Europäisches Patentamt

European Patent Office

Office européen des brevets

(19)

(11) **EP 0 872 386 A2**

(12) **EUROPEAN PATENT APPLICATION**

(43) Date of publication:
21.10.1998 Bulletin 1998/43

(51) Int Cl.$^6$: **B60R 16/02**

(21) Application number: 98830208.9

(22) Date of filing: **06.04.1998**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(30) Priority: **18.04.1997 IT MI970283 U**<br><br>(71) Applicant: **Sylea Italia S.r.l.**<br>**15023 Felizzano (Alessandria) (IT)** | (72) Inventor: **Colombo, Paolo**<br>**15023 Felizzano (Alessandria) (IT)**<br><br>(74) Representative: **Cicogna, Franco**<br>**Ufficio Internazionale Brevetti**<br>**Dott.Prof. Franco Cicogna**<br>**Via Visconti di Modrone, 14/A**<br>**20122 Milano (IT)** |

(54) **Push-button electronic device for controlling vehicle power windows**

(57) The present invention relates to a push-button electronic device (10) for controlling vehicle power windows, characterized in that the device comprises a small size electronic circuit (12) for controlling the operation of said device (10) and including a connection (21) to a series communication line, in order to allow said device (10) to be remotely controlled.

FIG. 1

## Description

The present invention relates to a push-button electronic device for controlling vehicle power windows.

More specifically, it relates to an electronic device comprising a connection to a series or serial communication line, in order to allow said device to be remotely controlled.

As is known, modern motor vehicles conventionally comprise power windows controlled by driving controls for causing the window glass to be automatically driven, which controls do not compel the driver or passenger to hold a related push-button preset for all the displacement of the glass.

This system is controlled by a suitably designed electronic circuit which, generally, is integrated in the window glass operating motor or in a separate driving or control module assembled on the vehicle wiring assembly or on dedicated central units.

The first solution presents the drawback that the electronic circuit is arranged in a location which is subjected to electromagnetic noise, as well as to mechanical stresses and dangerous climatic conditions.

Moreover, in a malfunction or failure condition, the recovering work is very expensive, since it is necessary to disassemble the overall panel of the vehicle door.

The second solution, on the other hand, is affected by other problems.

In fact, the above mentioned modular unit requires both connecting plugs for the outer connections and a supporting element to support said modular unit.

Thus, a comparatively large space is required, considering the great number of necessary connections between the driving push-button and modular unit, as well as between the modular unit and the electric motor.

In this connection it should be pointed out that the automatic power window systems must be suitably differentiated from conventional push-button operating systems.

In fact, whereas the first type requires to provide a modular unit similar to the already mentioned modular unit, the other systems exclusively require that power push-buttons be assembled.

The control and handling of an additional component will involve, for a vehicle maker, a consequent increase of the industrial-scale making costs.

## SUMMARY OF THE INVENTION

Accordingly, the aim of the present invention is to provide a push-button electronic device for operating vehicle power windows which, among the main features thereof, includes at least two very important and novel aspects.

At first, owing to its miniaturization, said device comprises a complex electronic part, for providing an integrated control of the operating functions thereof.

Moreover, it provides a connection to a serial communication line, thereby allowing the device to be easily remotely controlled.

The integration of the glass window displacement control functions will provide several advantages, such as a small size, mainly due to the fact that the device can be conventionally installed as a conventional power push-button.

Moreover, it is not necessary to modify the cable wiring, since the device would not involve any pin-out differences with respect to a conventional power push-button.

Furthermore, the number of components to be handled in making the subject device will be particularly small, and the possibility of providing a remote control, from a master central unit, will provide a very high designing flexibility.

In this connection, this latter aspect will provide a very important novelty.

In fact, owing to the above mentioned provision, it will be possible to interconnect the subject device to an intelligent or smart central unit network, as already present in the motor vehicle.

Said smart central units, under particular conditions, can send commands to the subject device which will constitute a true remote node of a local network.

The possible commands may be as follows: an automatic full opening/closing of the window glass; a step by step opening/closing of the window glass; a temporary inhibition of the operation; an end of line diagnostics, with the possibility of easily verifying the inner parameters, and so on.

Thus, as stated, the main object of the present invention is to provide a push-button electronic device, for operating vehicle power windows, having the above mentioned features, as well as a device which is easily susceptible to simple and unexpensive modifications and variations.

Accordingly, a particular object of the present invention is to provide such a push-button electronic device for operating vehicle power windows, comprising:

- a movable control push-button for controlling the driving of a vehicle window;
- a plurality of power components and related controlling circuit, specifically designed for operating a window glass driving electric motor, characterized in that said device comprises moreover:
- a small-size electronic circuit for controlling the operating functions of said device and comprising a connection to a serial communication line, in order to allow said device to be remotely controlled.

## BRIEF DESCRIPTION OF THE DRAWINGS

The present invention will be disclosed hereinafter, by way of an illustrative, but not limitative, example, of a preferred embodiment thereof, with reference to the figures of the accompanying drawings, where:

Figure 1 illustrates a schematic diagram of a push-button electronic device,

Figure 2 illustrates a schematic diagram of a control circuit for controlling the electronic device according to the invention;

Figure 3 illustrates a time diagram related to possible messages which are received through a serial communication line;

Figure 4 is a side view of a physical embodiment of the subject device;

Figure 5 is a front view of a physical embodiment of the subject device;

Figure 6 illustrates a typical current diagram for illustrating the current passing through the electric motor and its operating limits;

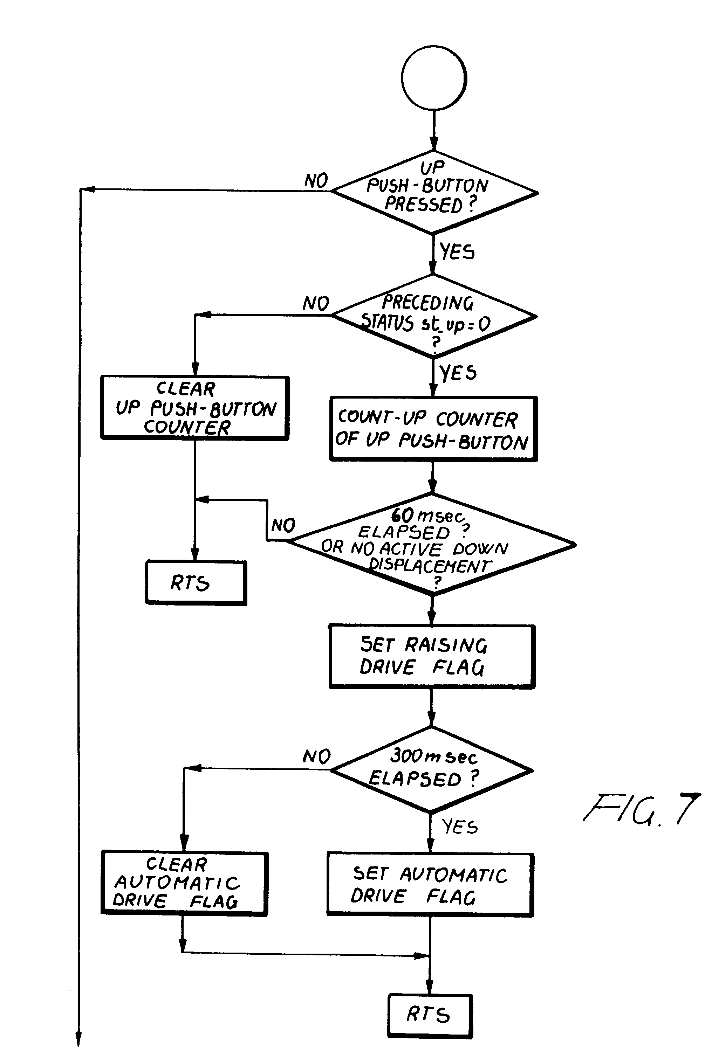

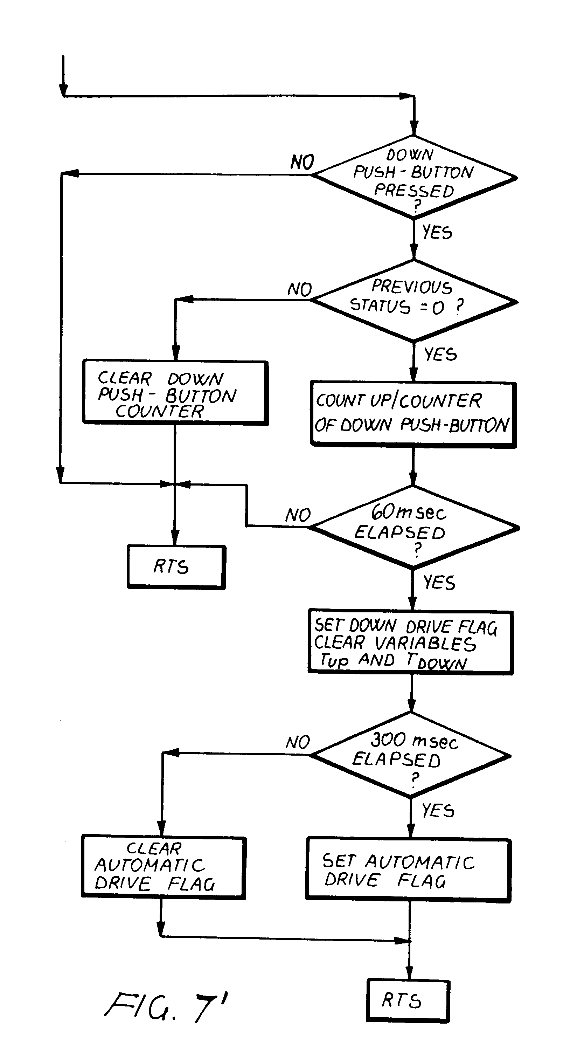

Figures 7 and 7' illustrates a routine for managing or controlling keys element;

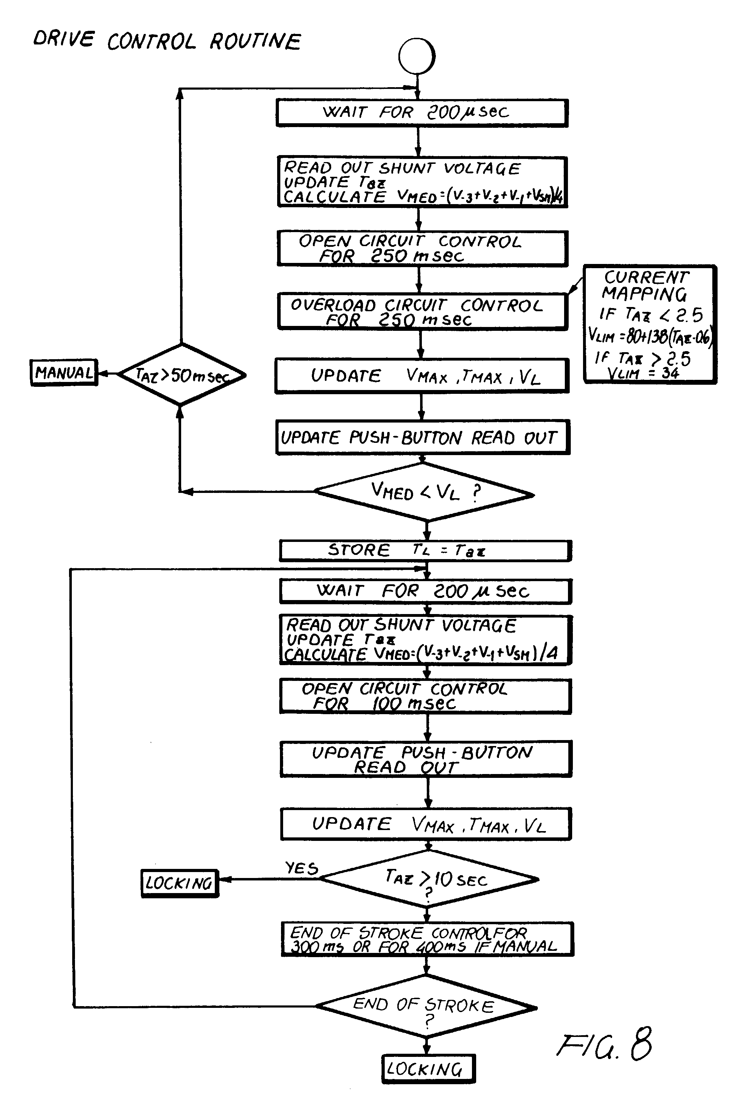

Figure 8 illustrates the drive managing routine;

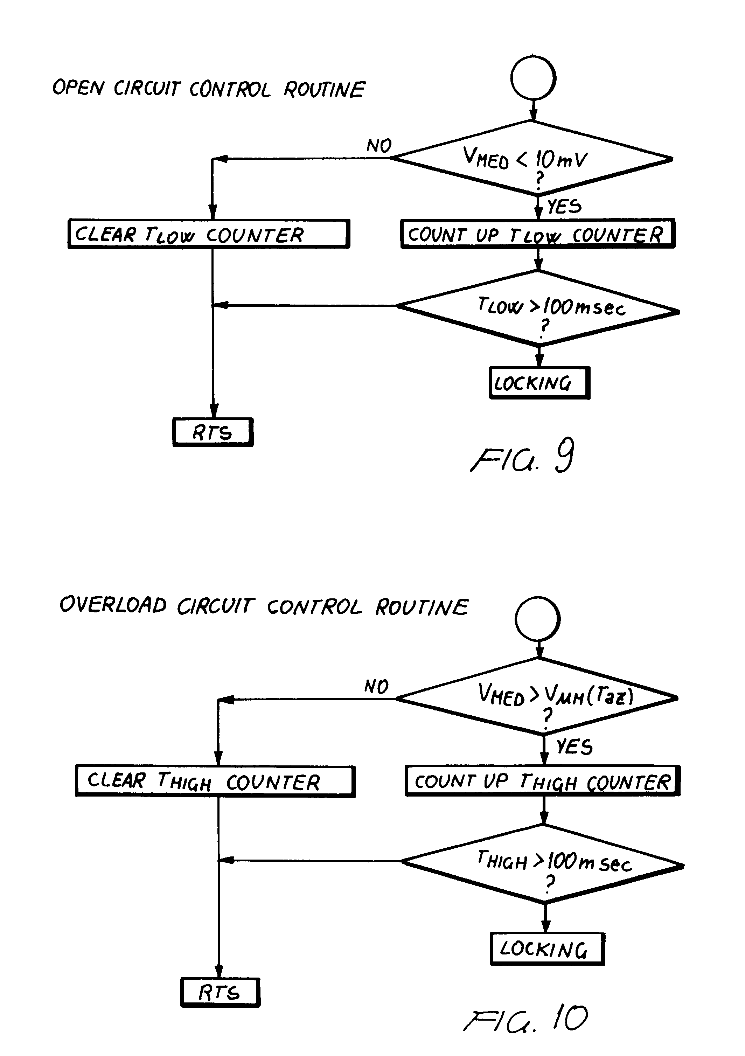

Figure 9 illustrates the open circuit managing routine;

Figure 10 illustrates the overload circuit managing routine;

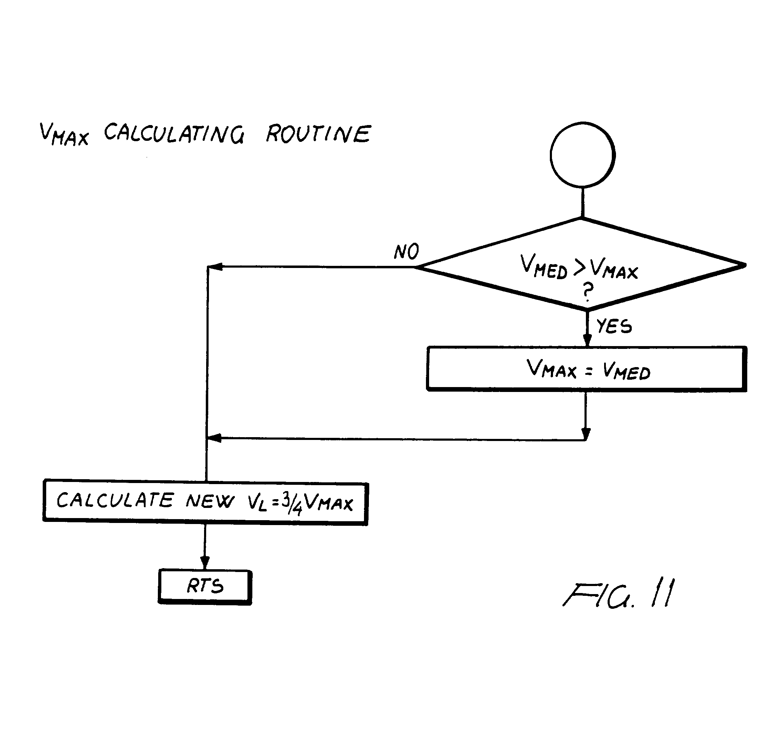

Figure 11 illustrates a routine for calculating V max; and

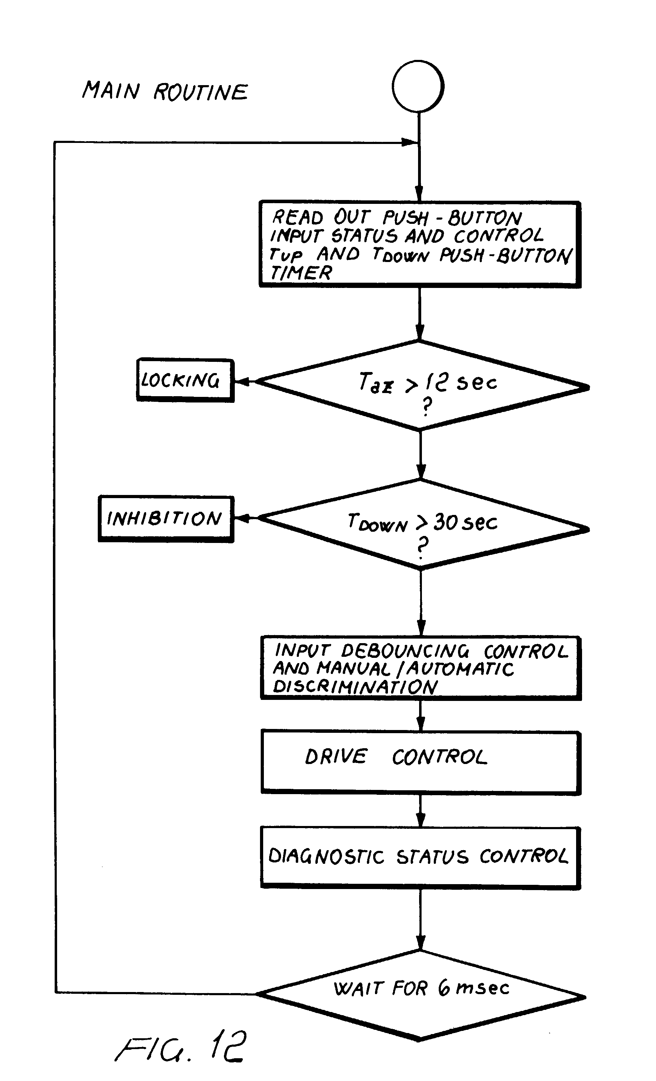

Figure 12 illustrates the main routine.

## DESCRIPTION OF THE PREFERRED EMBODIMENTS

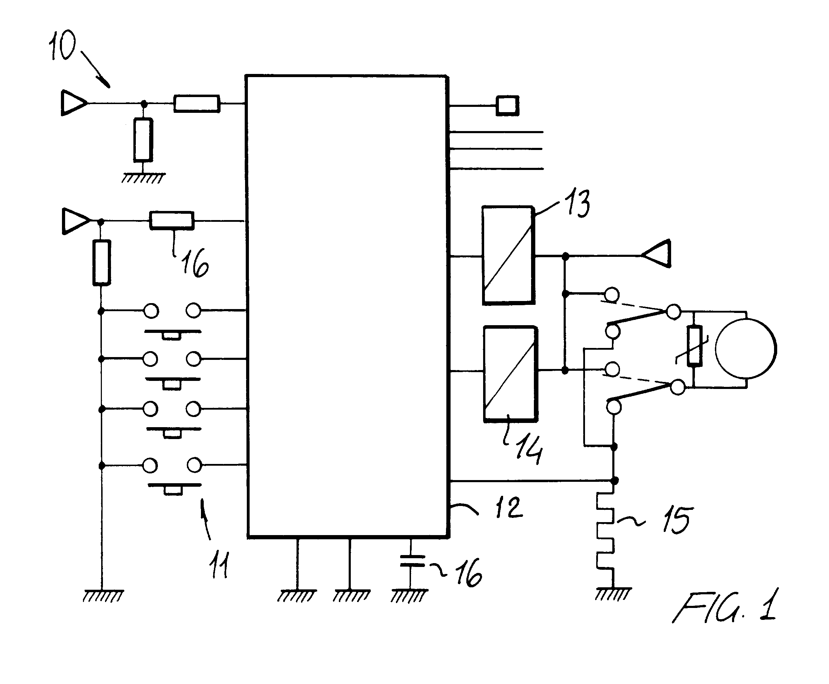

With reference to Figure 1 a preferred embodiment of the push-button electronic device 10 according to the present invention will be disclosed in a detailed manner hereinafter.

The device 10 comprises, in particular: a plurality of temporary push-buttons 10; a control circuit 12; an opening relay 13; a closing relay 14; a current measurement shunt; an output connector; a movable push-button provided with ideograms; a LED diode for illuminating said ideograms and a plurality of active and passive components 16.

As said movable push-button is pressed, then a signal will be sent to the control circuit 12. This control circuit will control or manage three types of operations: manual, automatic and degraded. Depending on the command signal duration, the logic system will set either a manual or an automatic operation.

In order to disclose the operation principle, several values will be hereinbelow illustrated for the several time amounts.

A manual operation will allow the window glass to be opened and closed in a conventional manner.

This is obtained by holding the push-button pressed for all of the glass driving or displacement time.

Moreover, it will be also possible to cause the window glass to be driven step-by-step, by holding the push-button pressed for a period of time from a minimum time (a debouching time of typically 50 ms) and a maximum time (of about 300 ms). This type of operation will allow small variations to the window glass position.

The automatic type of operation will allow the window glass to be opened and closed in an automatic manner. This is achieved by holding the push-button pressed for a time greater than 300 ms but less than 2 seconds.

The automatic operation can be interrupted at any desired points of the window glass displacement, by operating on any push-buttons for a time greater than the debouching time.

The control logic system will constantly monitor the current absorbed by the motor, and will cause said motor to stop after a time period from 100 to 200 ms after having achieved the end of stroke position of the window glass.

Moreover, if the user operates the control push-button as the window glass has achieved its end of stroke position, then the logic system will automatically interrupt the power supply to the electric motor within 300-400 ms.

This will occur even if the user holds the push-button pressed for a long period of time.

Under particular conditions, the degraded operation manner will allow to manually operate the window glass for a time not greater than 300 ms.

Thus, it will not be possible to provide an emergency closing or opening of the window glass.

In order to make this possible, the operating logic system will provide a minimum of diagnostics on the circuit operation.

In this diagnostic time the following functions will be verified: a detection of possible interruptions of the motor power supply cables, either of a temporary or of a permanent type; a detection of possible shorts or overloads on the motor power supply cables; a detection of operation failures on the control push-buttons, on the serial control line or on the anti-crashing protecting circuit.

Finally, a plurality of inputs for controlling the logic system according to specific operating modes are furthermore provided, i.e.: a manual/automatic selection, as disclosed; a manual/automatic selection in a reverse-logic mode, i.e. reversely to the above disclosed mode; a selection of the operating mode by a double contact (first contact: manual, second contact: automatic); a safety stop, actuated based on the crushing sensor status.

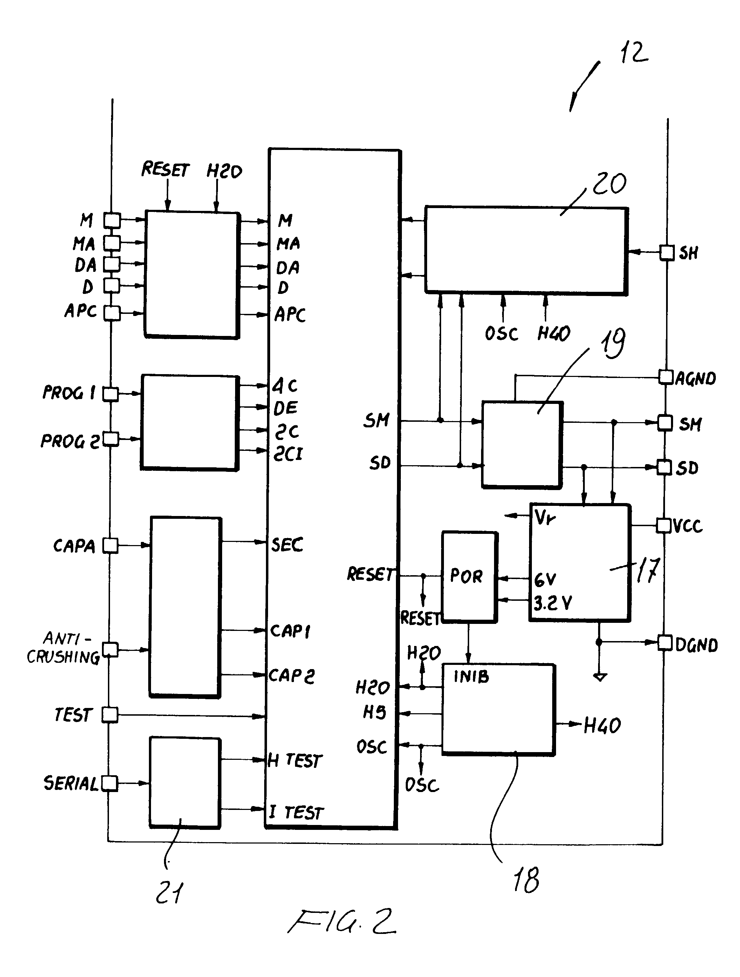

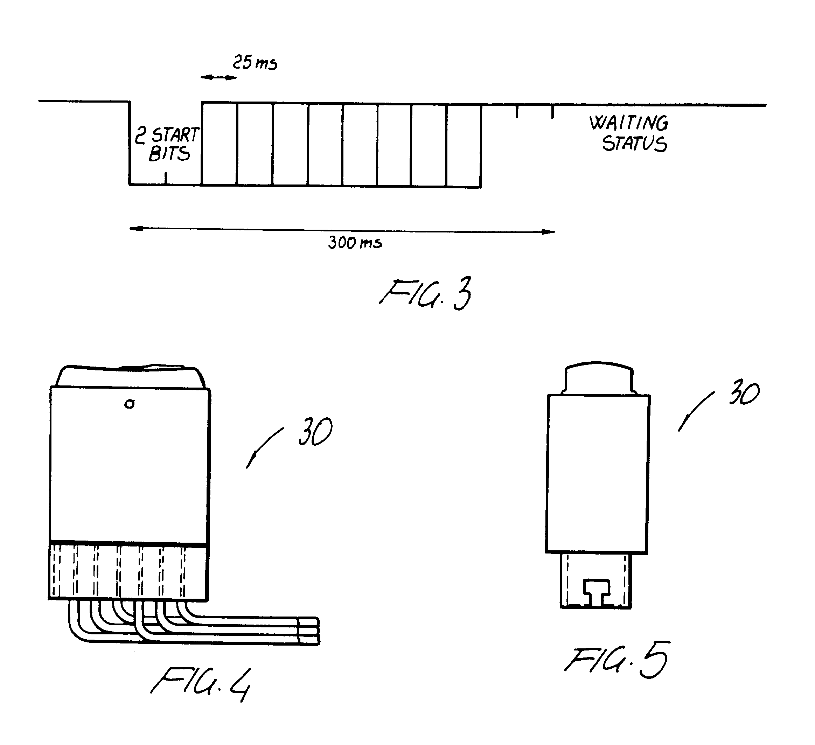

With reference to Figure 2, the operation of the electronic circuit 12 will be disclosed hereinafter.

Said circuit is power-supplied through an inner voltage regulator 17, designed for generating the proper voltage levels and the reset signals for initializing the circuit to a preset status.

This stage is protected against noise, possible shorts and overvoltages, as required by present rules related to the motor vehicle field.

The electronic circuit 12 comprises an oscillator 18, operating as an inner clock which requires a minimum number of outer components (a resistor and a capacitor).

This oscillator 18 will generate all of the inner frequencies necessary for operating the circuit.

The electronic circuit 12 comprises moreover a double control stage 19, related to the power window control relays.

More specifically, this driver has been designed for driving an inductive load of 300 mA maximum, and is protected against overcurrents and overvoltages by means of zener diodes and integrated fly-back diodes, as required by the present rules related to the motor vehicle field.

In order to detect the presence of current through the motor and the level of said current, the control logic system comprises furthermore an input analogic circuit 20, for picking up the current value through the measurement shunt 15.

Also this stage is protected against disturbing noise, shorts and overvoltages, as required by the present rules in the motor vehicle field.

In order to detect the condition or status of the electric motor, the amount of current passing through the shunt 15 is monitored.

To hold a set operating flexibility tolerance, a comparation with a variable reference is performed.

In fact, the detected values are always subjected to a dispersion because of constructional differences in the available electric motors, the driving mechanism therefor and in the environmental climatic conditions.

In order to achieve the above mentioned comparation, for each starting of the motor, the motor current detection or sensing system will continuously monitor the current through the circuit and will cause the motor to stop as the motor stopping conditions are verified.

The operating cycle comprises three phases or steps: the starting, the running and the stopping.

Figure 6 of the accompanying drawings illustrates a typical current through the motor, with the operation limits thereof.

With respect to the starting step: as the motor is power-supplied, the motor current will progressively increase to a maximum value Imax, identified by the point D.

The starting slope of the current will be set by the motor time constant, that is: t=L/R, where "L" represents the inductance of the motor, and "R" represents the resistance of the circuit (motor, switch therefor, wiring, fuses, conductive strips of the central unit and inner resistance of the battery).

As the motor starts to operate or rotate, the motor current will begin to decrease because of the "Fcem".

Usually, the starting period is considered as ended as the motor current lowers to the value of 0.75° Imax (point L).

In order to achieve an optimum operation of the system, the following conditions must be met:

the point "D" must be arranged inside the shaded quadrilateral shape, the limits of which are:

$$BA < Imax < 34A$$

$$0.6 - 2.5 \ ms < Tmax < 50 \ ms$$

$$0.6 - 2.5 \ ms < T_L < 50 \ ms$$

If the point "D" is arranged outside the mentioned quadrilateral configuration, then the system will operate with a degraded performance, and it will automatically switch to a manual mode, and will not further allow an automatic operation.

If Imax>34A or Imax<8A or Tmax>0.6-2.5 ms, i.e. in the region inside the mentioned quadrilateral configuration, then the system will detect more easily a stop condition due to an effort on the window glass, and this will be increasingly true as one moves away from the indicated values.

If $T_L > 50ms$, then the system will automatically switch to a stop mode, in which no automatic operation is allowed.

The running is the window glass displacement period of time and, in Figure 2, it is shown by the region between the points "L" and "H".

The running or operating current must met the following conditions:

$$1 \ A < It < 0.75° \ Imax$$

The stopping of the motor occurs as to the window glass an effort or force is applied, which may be due to a foreign body, to a normal end of stroke position or to an undesired stiffening of the window glass guides.

In order to achieve the mentioned stopping it is necessary that:

$$Ib > 0.75° \ Imax \ (point \ H)$$

Ib must have a duration corresponding to the reaction time Tb of the safety stop system:

$$300 \ ms < Tb < 400 \ ms$$

In this connection it should be pointed out that the safety stop system will be switched on for protecting the device from possible mechanical failures, or other failures of the push-buttons, the wirings or from the opening of the thermal protecting device associated with the window operating motor.

In this case, the safety stop or stopping mode is provided for the following conditions:

° Open circuit
I < 1 A
for a time > 400 msec

° Push-buttons under a short conditions at the start for a time > 200 msec

° A push-button "down" in a short condition for a time > 30 sec.

The input stage 21 will codify a serial signal sent from the outside.

This stage 21 is protected against disturbing noises, shorts and overvoltages, as required by the enforcing rules in the motor vehicle field.

The serial message, shown in the time diagram of Figure 3, comprises at least the following fields or bits: two synchronizing bits; a glass closure information bit; a glass opening information bit; a total/manual information bit; a temporary inhibition information bit; an immediate stopping information bit; a diagnostic actuating information bit; an available information bit; an even parity bit; two end of message bits.

The typical transmission rate is of 40 bauds (25 ms/bit) and the message duration will be of 250±37.5ms.

The message is sent to the master central unit with a maximum rate of 1±0.1 seconds.

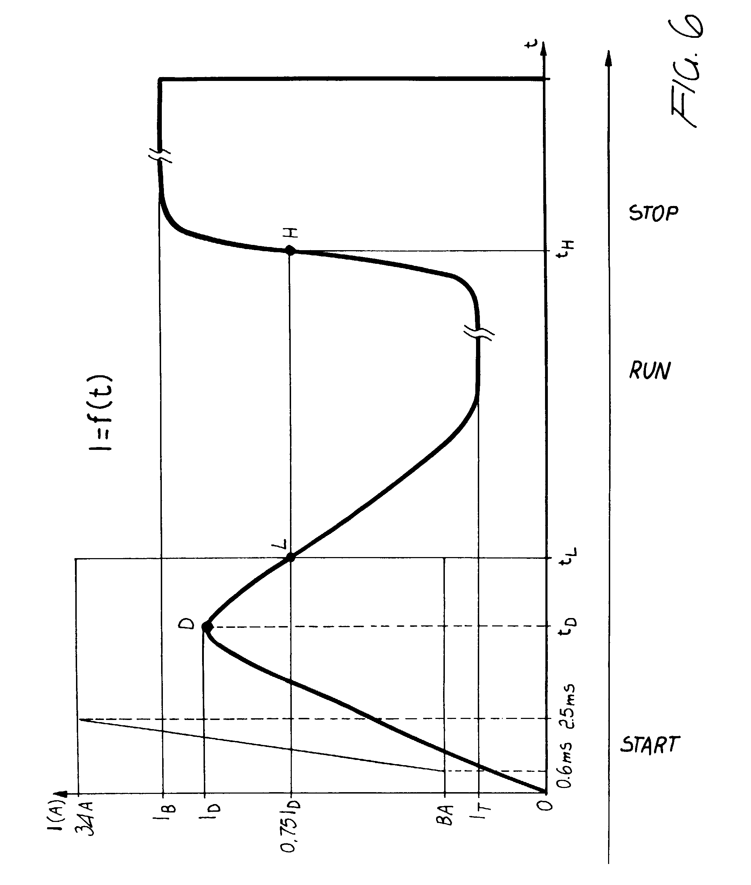

Figures 4 and 5 illustrates respectively a side and front view of the push-button device according to the present invention, as it is physically implemented.

From these Figures it should be apparent that the subject device has a size identical to that of conventional devices.

Moreover, the amount of wiring cables is held unchanged, while providing all of the above mentioned advantages.

While the invention has been disclosed and illustrated with reference to a preferred embodiment thereof, it should be apparent that the disclosed embodiment is susceptible to several modifications and variations, all of which will come within the scope of the appended claims.

## Claims

1. A push-button electronic device for controlling power windows of vehicles, comprising: a control movable push-button for driving a vehicle window glass; a plurality of power components and a related controlling circuit, adapted to drive or control said window glass driving electric motor, characterized in that said device comprises moreover: a small size electronic circuit for controlling the operating functions of said device and comprising a connection to a serial communication line, in order to allow said electronic device to be remotely controlled.

2. A push-button electronic device for controlling power windows of vehicles, according to Claim 1, characterized in that said electronic circuit comprises an inner voltage regulator, for generating set voltage levels and reset signals for initializing said circuit to a set status.

3. A push-button electronic device for controlling power windows of vehicles, according to Claim 1, characterized in that said electronic circuit comprises moreover an oscillator generating all of the inner frequencies necessary for operating said electronic circuit.

4. A push-button electronic device for controlling power windows of vehicles, according to Claim 1, characterized in that said electronic circuit comprises moreover two control stages for controlling a pair of relays in turn controlling said window glass power device.

5. A push-button electronic device for controlling power windows of vehicles, according to Claim 1, characterized in that said electronic circuit comprises moreover an input analogic circuit, for detecting or sensing the presence of current through said electric motor.

6. A push-button electronic device for controlling power windows of vehicles, according to Claim 1, characterized in that said electronic circuit comprises moreover an input stage for codifying a serial signal sent from the outside.

7. A push-button electronic device for controlling power windows of vehicles, according to one of Claims 2 to 6, characterized in that said electronic circuit controls three types of operations: a manual operation mode allowing the window lass to be opened and closed in a conventional manner; an automatic operation mode allowing the window glass to be opened and closed without compelling the user to hold a related push-button pressed for all of the duration of the window glass displacemt; and a degraded operation mode, allowing an emergency closing or opening of said window glass in a case of a failure or malfunction of said devices.

8. A push-button electronic device for controlling power windows of vehicles, according to one or more of the preceding claims, characterized in that said device is adapted to provide the logic for detecting the operation or rotation of said motor by a continuous comparation between the current drained by said motor and a current profile stored in an inner tore of the control electronic, according to a specifically designed mapping of the drained current values, defined by the formula $V_{LIM} = 80 + 136° (T_{az} - 0.6)$, the voltage values being in milliVolts and where $T_{az}$

represents the time variable in milliseconds.

FIG. 1

EP 0 872 386 A2

FIG. 2

WAITING STATUS

25 ms

300 ms

2 START BITS

FIG. 3

30

FIG. 5

30

FIG. 4

I = f(t)

FIG. 6

FIG. 7

DOWN
PUSH - BUTTON
PRESSED
?

NO

YES

PREVIOUS
STATUS = 0 ?

NO

YES

CLEAR DOWN
PUSH - BUTTON
COUNTER

COUNT UP/COUNTER
OF DOWN PUSH-BUTTON

60 msec
ELAPSED
?

NO

YES

RTS

SET DOWN DRIVE FLAG
CLEAR VARIABLES
$T_{UP}$ AND $T_{DOWN}$

300 msec
ELAPSED
?

NO

YES

CLEAR
AUTOMATIC
DRIVE FLAG

SET AUTOMATIC
DRIVE FLAG

FIG. 7'

RTS

DRIVE CONTROL ROUTINE

FIG. 8

OPEN CIRCUIT CONTROL ROUTINE

FIG. 9

OVERLOAD CIRCUIT CONTROL ROUTINE

FIG. 10

V_MAX CALCULATING ROUTINE

$V_{MED} > V_{MAX}$ ?

NO

YES

$V_{MAX} = V_{MED}$

CALCULATE NEW $V_L = \frac{3}{4} V_{MAX}$

RTS

FIG. 11

EP 0 872 386 A2

MAIN ROUTINE

○

READ OUT PUSH-BUTTON
INPUT STATUS AND CONTROL
$T_{UP}$ AND $T_{DOWN}$ PUSH-BUTTON
TIMER

LOCKING ◄── $T_{az} > 12$ sec ?

INHIBITION ◄── $T_{DOWN} > 30$ sec ?

INPUT DEBOUNCING CONTROL
AND MANUAL / AUTOMATIC
DISCRIMINATION

DRIVE CONTROL

DIAGNOSTIC STATUS CONTROL

WAIT FOR 6 msec

FIG. 12

16